# EUROPÄISCHE PATENTANMELDUNG

(11) **EP 4 148 007 A1**
(43) Veröffentlichungstag der Anmeldung: **15.03.2023**
(21) Anmeldenummer: 22193092.8
(22) Anmeldetag: 31.08.2022
(51) Int. Cl.: B65G 47/76, B65G 47/82

(54) **SORTIERVORRICHTUNG**

(30) Priorität: 06.09.2021 DE 102021123023
(71) Anmelder: WIPOTEC GmbH, 67657 Kaiserslautern (DE)
(72) Erfinder: Höhler, Hans-Sebastian, 31141 Hildesheim (DE); Müller, Ernst Moritz, 30629 Hannover (DE)
(74) Vertreter: Mischung, Ralf

(57) **Zusammenfassung**

Die Erfindung betrifft eine Sortiervorrichtung zum Aussortieren diskreter Produkte, wobei ein mittels einer Rolle angetriebenes Reibelement an ein auszusortierendes Produkt angedrückt wird, um mit einer dadurch erzeugten Reibkraft das Produkt aus dem Produktstrom heraus zu lenken und dadurch auszusortieren.

## Beschreibung

Die vorliegende Erfindung betrifft eine Sortiervorrichtung und ein zugehöriges Verfahren zum Aussortieren diskreter Produkte aus einem Produktstrom.

Derartige Sortierverrichtungen sind in verschiedenen Ausführungen bekannt. Dabei werden zum Aussortieren einzelner Produkte verschiedene Lenkmittel (zum Beispiel Pusher, Weichen, Klappen oder Blasdüsen) verwendet, die entlang des Förderweges betätigar sind, um einzelne Produkte mit einer Auslenkkraft zu beaufschlagen und aus dem Förderweg heraus zu bewegen.

Schwierigkeiten bereiten dabei schnell und mit geringem Abstand zueinander geförderte Produkte, da die Lenkmittel für eine Vor- und Zurückbewegung hier oft nicht ausreichend schnell und genau genug bewegbar sind, um aus der Folge von eng zueinander beabstandeten und schnell geförderten Produkten eines gezielt zu erreichen, um es auszusortieren. Das gilt insbesondere auch dann, wenn schmale Produkte (deren Länge deutlich größer ist als ihre Breite) mit ihren Längsrichtungen quer zur Förderrichtung und eng beabstandet auf einem Förderband transportiert werden. Dazu gehören beispielsweise riegelförmige Produkte (Schokoriegel o.ä.). Auch flache Beutel (die auch als Sticks bezeichnet werden können, Schlauchbeutel, Gewürzbeutel etc.) lassen sich beispielsweise mit Blasdüsen schlecht aussortieren, da sie seitlich nur eine geringe Angriffsfläche für einen Druckluftstrahl bieten. Auch die Verwendung eines Schiebers ist hier ungeeignet, da der zum sicheren Aussortieren nötige große Hub aufgrund der großen Länge relativ zur Breite bei kurzem Produktabstand nicht realisierbar ist.

Aufgabe der Erfindung war es daher, für mit hoher Förderrate bzw. bei hoher Geschwindigkeit geförderte diskrete, schmale oder flache Produkte eine Sortiervorrichtung anzubieten, welche die vorgenannten Nachteile überwindet.

Die Aufgabe wird gelöst durch eine Sortiervorrichtung nach Anspruch 1 und ein zugehöriges Verfahren nach Anspruch 7. Weitere vorteilhafte Ausführungsformen ergeben sich aus den Unteransprüchen.

Die Erfindung basiert auf der Erkenntnis, Produkte durch Beaufschlagung mit einer Reibkraft schnell und einfach aussortieren zu können. Dabei erzeugt ein mit dem Produkt in Kontakt gebrachtes bzw. daran angedrücktes Reibelement eine auf das Produkt einwirkende Reibkraft. Die Richtung der Reibkraft ist so gewählt, dass sich das beaufschlagte Produkt der Reibkraft folgend seitlich aus dem Produktstrom heraus bewegt, um dort beispielsweise in einen Behälter zu fallen oder auf einen anderen Förderweg gelenkt zu werden.

Die erfindungsgemäße Sortiervorrichtung umfasst ein Fördermittel, mit welchem darauf aufliegende diskrete Produkte entlang eines Förderweges in einer Förderrichtung X förderbar sind. Das Fördermittel ist bevorzugt ein angetriebenes Förderband, auf dem eine Mehrzahl von Produkten hintereinander und eng beanstandet aufliegen und gefördert werden kann. Alternativ kann das Fördermittel auch eine durch eine Rutsche oder ein Gleitblech gebildete Gleitfläche oder eine Plattenkette sein. Wesentlich ist, dass das Fördermittel dazu geeignet ist, auf ihm aufliegende Produkte entlang der Oberfläche des Fördermittels zu bewegen bzw. zu verschieben. Die Produkte können auch angeordnet sein als einzelne Gruppen, wobei eine Gruppe aus mehreren, eng zueinander beanstandeten Produkten besteht, und wobei die Gruppe zu einer nachfolgenden oder vorausgehenden Gruppe einen Abstand aufweist, der größer, kleiner oder identisch ist zum Abstand der Produkte innerhalb der Gruppe.

Außerdem umfasst die Sortiervorrichtung eine um eine Achse mit hoher Drehzahl antreibbare erste Rolle. Die erste Rolle dient entweder selbst als Reibelement, oder sie treibt ein als Band ausgebildetes Reibelement an, welches die erste Rolle teilweise oder vollständig umläuft. Die erste Rolle und mit ihr das Reibelement rotiert, vorzugsweise mit hoher Drehzahl (500 - 3000 U/min).

Das Reibelement ist erfindungsgemäß in einer Hubrichtung Z zum Fördermittel hin absenkbar bzw. davon weg anhebbar, um während der Absenkbewegung gezielt ein entlang des Fördermittels gefördertes Produkt mit einer Anpresskraft zu beaufschlagen. Dabei berührt das Reibelement das Produkt auf dessen Oberseite entlang einer Kontaktzone und erzeugt dabei eine zwischen Reibelement und Produkt wirkende Reibkraft. Die erste Rolle bzw. ihr Reibelement ist dabei so ausgerichtet, dass das Produkt infolge der Reibkraft in eine von der Förderrichtung X abweichende erste Sortierrichtung beschleunigt und durch seitliches Herausschleudern aus dem Produktstrom heraus sortiert wird.

Der Begriff "Rolle" umfasst hier beispielsweise auch ein radförmiges Element, welches eine Nabe und davon ausgehende Speichen aufweist, die sich zu einem äußeren, den Radumfang bildenden, umlaufenden Körper erstrecken. Die Speichen können nach einer vorteilhaften Ausführung auch gekrümmt verlaufen, um in radialer Richtung eine Flexibilität bzw. geringe Steifigkeit auszubilden, sodass sich der umlaufende Körper relativ zur Nabe bewegen lässt und dadurch ein weiches Andrücken der Rolle an ein Produkt begünstigt. Auch ein anderer rotationssymmetrischer Körper, der auf seinem Außenumfang eine griffige Struktur aufnehmen kann oder einstückig damit ausgebildet ist, kann unter den Begriff "Rolle" fallen, beispielsweise ein Zahnrad.

Das Reibelement kann einstückig mit der ersten Rolle ausgebildet oder als Reibbelag oder Riemen an dieser befestigt sein. So könnte die erste Rolle beispielsweise aus einem weichen, griffigen Material gebildet werden. Durch seine weiche Beschaffenheit kann das Reibelement gut auf das Produkt aufgedrückt werden und sich dabei flexibel an dessen Oberfläche anschmiegen, um einen möglichst griffigen Kontakt zur Erzeugung und Übertragung der Reibkraft herzustellen. Das Material des Reibelements kann beispielsweise Schaumstoff, Gummi, Moosgummi oder ein anderes, dem Fachmann bekanntes Material mit möglichst hohem Reibbeiwert sein. Es kann außerdem mit regelmäßigen Erhebungen oder Vertiefungen (Lamellen, Noppen etc.) oder einem anderen Profil versehen sein, um neben der reibschlüssigen Verbindung wenigstens teilweise auch eine formschlüssige Verbindung mit dem auszusortierenden Produkt eingehen zu können. Hierfür kommt beispielsweise ein Zahnriemen oder ein PU-Keilriemen in Betracht. Die weiche Beschaffenheit des Reibelements und/oder seines Profils reduziert aufgrund seiner Verformbarkeit auch die Gefahr, menschliche Gliedmaßen zwischen Reibelement und Produkt einzuziehen bzw. einzuklemmen. Ein weiches, in radialer Richtung kompressibles Reibelement ermöglicht außerdem die Anwendung auch bei unregelmäßig geformten Produkten, da sich das Reibelement an die Kontur des Produktes beim Kontakt anschmiegen kann.

Die Verformbarkeit des Reibelement erlaubt außerdem größere Toleranzen in der Parametrisierung der Vorrichtung. Geringe Abweichungen der Produkthöhe oder der Absenktiefe des Reibelements werden durch die Flexibilität des Reibelements ausgeglichen, welches sich dann mehr oder weniger stark an das Produkt angedrückt.

Anstatt die erste Rolle gleichzeitig bzw. einstückig als Reibelement auszubilden, ist es auch denkbar, die erste Rolle nur an ihrem äußeren Umfang mit einem Reibelement der vorgenannten Art auszurüsten. So könnte beispielsweise ein ringförmiges Reibelement oder ein Reibelement-Riemen mit geeigneter Vorspannung um die Rolle herumgelegt werden. Dann ist das Reibelement leicht auswechselbar, während die Rolle aus einem steiferen Material gebildet sein kann, auf das eine Antriebskraft zur Rotationserzeugung leichter übertragbar ist. Ein solcher Rollenkörper könnte beispielsweise auch im 3D-Druck hergestellt werden und einstückig auch eine Rollenachse und/oder ein Zahnrad oder Zahnprofil aufweisen, über welches die erste Rolle von einem benachbarten Motor mittels Zahnriemen oder Kette zur Rotation antreibbar ist. Auch eine Rolle, die einstückig mit bzw. als Reibelement ausgebildet ist, lässt sich im 3D-Druck herstellen.

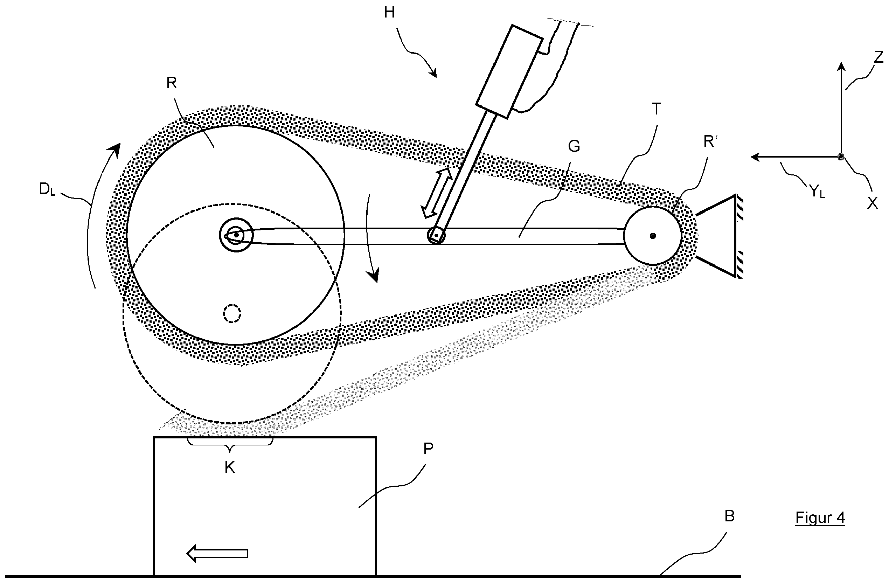

Schließlich ist es denkbar, das Reibelement in Form eines länglichen Riemens auszubilden, der um die angetriebene erste Rolle und eine davon beanstandete zweite Rolle geführt wird und dabei einen lang gestreckten geraden Riemenabschnitt bildet (Fig. 4). Das auszusortierende Produkt könnte in diesem Fall auch von dem geraden Abschnitt beaufschlagt werden. Dadurch vergrößert sich die Kontaktzone, was die Erzeugung und Übertragung der zum Aussortieren erforderlichen Reibkraft erleichtert. Dabei kann es genügen, nur eine der beiden Rollen in Richtung auf das Produkt abzusenken, wenn in der abgesenkten Position der gerade Riemenabschnitt im Wesentlichen parallel zur Produktoberfläche auf dieser aufliegt.

Nach einer vorteilhaften Ausführungsform der Erfindung ist vorgesehen, dass sich die Drehrichtung der Rolle (und mit ihr die Drehrichtung des Reibelements) vorteilhaft umkehren lässt. Dadurch kehrt sich beim Kontakt mit dem Produkt auch die Richtung der Reibkraft um, sodass sich das Produkt in entgegengesetzter Richtung aus dem Produktstrom bzw. auf die andere Seite des Fördermittels aussortieren lässt. Dadurch lassen sich Produkte wahlweise in zwei verschiedene, zum Beispiel entgegengesetzte Richtungen aussortieren.

Vorzugsweise ist das Reibelement in Hubrichtung Z bewegbar, indem die wenigstens eine Rolle zwischen einer oberen Endlage Zo und einer unteren Endlage Zu mittels eines Hubmechanismus entlang einer geraden oder gekrümmten Bahn auf und ab bewegbar ist. Der Hubmechanismus ist in Bezug auf die Förderrichtung ortsfest. In der oberen Endlage ist das Reibelement so weit oberhalb des Fördermittels positioniert, dass die Produkte ungestört in Förderrichtung darunter hindurch gefördert werden können. In der unteren Endlage liegt der tiefste Abschnitt des Reibelement tiefer als die Oberseite der Produkte. Um ein Produkt gezielt auszusortieren, wird das Reibelement mittels Hubmechanismus so abgesenkt, dass es genau dann die Oberseite des geförderten Produkts kontaktiert und beaufschlagt, wenn dieses entlang seines Förderwegs die Position unterhalb des Reibelements erreicht. Die dabei unmittelbar und gegebenenfalls nur kurzzeitig auftretende Reibkraft und die hohe Drehzahl der Rolle bzw. des Reibelements sorgt dafür, dass das Produkt schlagartig seitlich aus dem Produktstrom herausbewegt wird. Aufgrund der vorzugsweise starken Beschleunigung des Produktes kann auch von Herausschleudern gesprochen werden.

Bevorzugt ist die Rolle und das von ihr angetriebene Reibelement orthogonal zur Förderrichtung angeordnet, die Rollenachse verläuft dann parallel zur Förderrichtung. In diesem Fall verläuft die erste Sortierrichtung ebenfalls quer bzw. orthogonal zur Förderrichtung und die Produkte werden rechtwinklig aus dem Produktstrom ausgeschleust. Der Sortierwinkel α zwischen Förderrichtung und Sortierrichtung beträgt dann 90°. Es ist allerdings auch denkbar, einen anderen Sortierwinkel zu wählen, um einzelne Produkte schräg nach vorne oder hinten aus dem Produktstrom heraus zu bewegen. Der Sortierwinkel α ist dann größer oder kleiner als 90°.

Die Rollenachse kann gegenüber der Förderrichtung auch geneigt sein, beispielsweise in Förderrichtung leicht abfallend. Bei einem im Wesentlichen zylindrischen Reibelement entsteht dadurch ein sich verjüngender Keil zwischen der Oberfläche des Produktes und dem Reibelement. Dadurch kann eine zusätzliche Andruckkraft generiert werden, indem das auszusortierende Produkt während der Förderung in Förderrichtung den Keil mit dem (vollständig oder teilweise) bereits abgesenkten Reibelement ausbildet und dadurch in Richtung auf das Förderelement geklemmt wird. Dieser Klemmvorgang ist allerdings nur von kurzer Dauer, da das Produkt durch das angetriebene Reibelement zugleich seitlich aus dem Produktstrom heraus bewegt wird.

Der vertikale Abstand zwischen der oberen Endlage Zo und der unteren Endlage Zu ist möglichst gering gewählt und beträgt bevorzugt weniger als 20mm, höchst bevorzugt weniger als 10mm. Der geringe Hub lässt sich vorteilhaft in kurzer Zeit durchfahren, sodass die Sortiervorrichtung sehr schnell auf ein auszusortierendes Produkt abgesenkt werden kann. Die Position der beiden Endlagen ist vorzugsweise messbar und/oder einstellbar. Jede Position, insbesondere die untere Endlage, kann mittels einer Steuereinheit automatisch einstellbar sein, etwa nach Maßgabe zuvor erfasste Betriebsparameter oder Abmessungen bzw. Abstand der Produkte zueinander. Beispielsweise könnte bei einer Produkthöhe von 20mm die untere Endlage so eingestellt werden, dass sich das Reibelement (ohne darunter liegendes Produkt) bis auf 15mm oberhalb des Förderbands absenken würde bzw. sich um 5mm zusammendrückt, während es ein darunter liegendes Produkt beaufschlagt (Andruckmaß 5mm, siehe unten). Diese Einstellung kann automatisch erfolgen, indem die Höhe (oder auch weitere Maße) jedes einzelnen Produkts oder eines stellvertretenden Produkts einer Charge automatisch erfasst und der Steuereinheit signalisiert wird. So können auch Produkte mit unterschiedlichen Höhen aufeinanderfolgen und über das jeweils automatisch angepasste Andruckmaß bei Bedarf aussortiert werden.

Der Hubmechanismus kann beispielsweise über einen Piezoantrieb und/oder über eine Kurvenscheibe und/oder über einen pneumatischen und/oder elektromechanischen Antrieb betätigt werden. Beispielsweise könnte er über einen Kurzhubzylinder pneumatisch angetrieben werden.

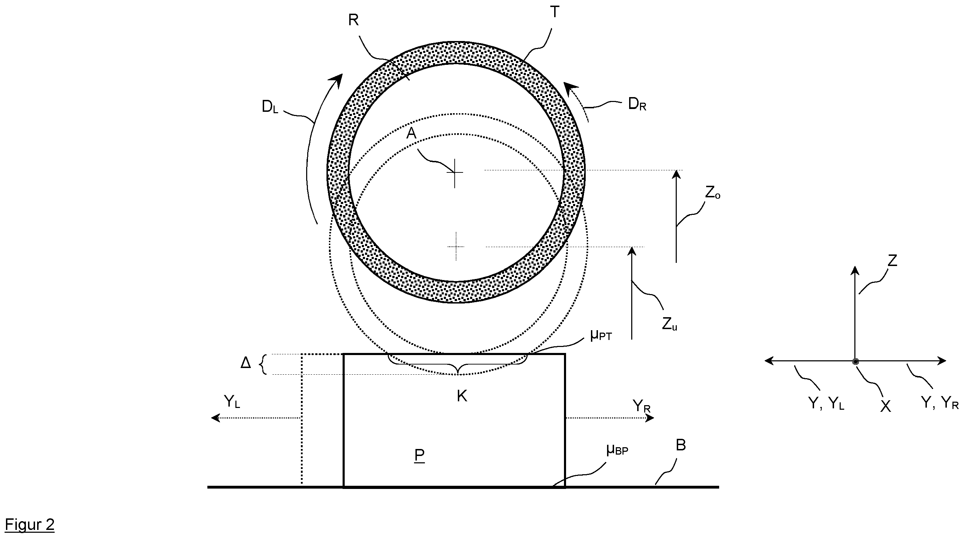

Die Anpresskraft, mit welcher das Reibelement das Produkt beaufschlagt, ist bevorzugt wählbar. Dabei könnte eine Mindest-Anpresskraft vorgegeben werden durch Einstellung einer unteren Endlage Zᵤ, in der (ohne Beaufschlagung eines Produkts) die Unterseite des Reibelements um ein vorgegebenes Andruck-Maß Δ tiefer läge als die Oberseite des Produktes. Bei Beaufschlagung eines Produkts muss sich das Reibelement um das Andruck-Maß verformen (siehe Figur 2) und übt dabei je nach Größe des Andruck-Maßes Δ eine bestimmte Kraft auf das Produkt aus. Alternativ oder ergänzend ist es denkbar, den Hubmechanismus kraftgesteuert bis zum Erreichen einer vorgebbaren Gegenkraft bzw. Anpresskraft abzusenken.

Die Absenk- und/oder Anhebebewegung kann über eine geeignete Steuereinheit nach vorgegebenen Bedingungen erfolgen und beispielsweise einem vorgebbaren Weg-ZeitProfil folgen. Denkbar ist ferner, das Reibelement stets bis zum Erreichen einer vorgegebenen Andruckkraft abzusenken. Dadurch lassen sich unterschiedliche Produkte aussortieren, ohne dass hierfür Parameter geändert oder das System neu eingelernt werden müsste. Gleiches gilt für die Rotationsgeschwindigkeit der Rolle, für die ein geeignetes Profil vorgegeben werden kann. Damit könnte beispielsweise sichergestellt werden, dass die Rolle in der angehobenen Position mit keiner oder geringer Drehzahl angetrieben wird, vor der Kontaktierung mit einem Produkt jedoch eine Mindestdrehzahl erreicht. Die Ansteuerung kann dabei auch so erfolgen, dass das vorgegebene Profil mithilfe von Messwerten abgeändert und so auf das jeweilige Einzelprodukt oder eine Charge angepasst wird.

Obwohl sich die Erfindung besonders vorteilhaft eignet für schnell geförderte Produkte, kann sie auch gut eingesetzt werden bei Produkten, die mit geringer Geschwindigkeit oder gar im Start-Stopp-Betrieb gefördert werden (Im Start-Stopp-Betrieb erfolgt die Förderung nicht kontinuierlich, sondern mit Unterbrechungen. Diese können regelmäßig oder unregelmäßig auftreten, etwa bei Schwankungen in der Zulieferung oder bei vorausgehenden Wiegevorgängen, bei denen das Produkt im Ruhezustand gewogen wird). Ein auszusortierendes Produkt kann dann vom Reibelement beaufschlagt werden, während es in Förderrichtung transportiert wird (bevorzugter Fall) oder auf dem Fördermittel im Wesentlichen bewegungslos aufliegt bzw. ruht.

Das erfindungsgemäße Verfahren nutzt die zuvor beschriebene Sortiervorrichtung und umfasst folgende Verfahrensschritte:
a) Absenken des angetriebenen Reibelements auf ein darunter auf dem Fördermittel angeordnetes und vorzugsweise gleichzeitig in Förderrichtung X gefördertes, auszusortierendes Produkt, so dass das Reibelement die dem Fördermittel abgewandte Oberseite des Produkts entlang einer Kontaktzone mit einer Anpresskraft beaufschlagt, um das Produkt durch seitliches Herausschleudern aus dem Produktstrom herauszusortieren;
b) Anheben des Reibelements, um ein nachfolgendes Produkt passieren zu lassen oder in Wiederholung von Schritt a) ebenfalls auszusortieren.

Zur Ausführung des Verfahrens kann eine geeignete Steuereinheit vorgesehen sein, welche die Bewegung des Reibelements bzw. der Rolle mit umlaufenden Reibelement steuert in Abstimmung mit weiteren Parametern, die das auszusortierende Produkt betreffen. Dabei kann es sich handeln um die Position des Produkts entlang des Förderwegs, seine Geschwindigkeit, seine Ausrichtung, seine Abmessungen, seine Fragilität, die Beschaffenheit einer oder mehrerer Oberflächen des Produkts, das Produktgewicht oder weitere mit dem Produkt verknüpfte Merkmale, beispielsweise metallische oder andere unerwünschte Bestandteile in einem Lebensmittelprodukt.

Wird das Reibelement mit einem Hubmechanismus bewegt, so steuert die Steuereinheit den Mechanismus entsprechend an. Die Steuereinheit kann Informationen zur Identifikation des auszusortierenden Produktes von einer separaten Sensoreinheit erhalten. Alternativ ist es denkbar, die auszusortierenden Produkte mithilfe der Steuereinheit zu identifizieren und dazu beispielsweise Bilderkennungsmittel, RFID oder andere, dem Fachmann bekannte Sensor- oder Erkennungsmittel zu verwenden. So könnte eine Kamera auf den Produktstrom gerichtet sein, deren Bildsignale von der Steuereinheit dahingehend ausgewertet werden, ob beispielsweise ein von der Kamera erfasster Schokoriegel zu groß oder zu klein ist oder eine fehlerhafte Kennzeichnung trägt, fehlerhaft verpackt wurde oder dergleichen. Andere Sensoren können dafür verwendet werden, um festzustellen, ob das Produkt zu leicht oder zu schwer, oder mit Fremdkörpern kontaminiert ist. Insbesondere eine Waage oder auch eine Röntgeninspektionsvorrichtung kann verwendet werden, um wenigstens eine Eigenschaft des Produkts zu ermitteln, welche maßgeblich für die Entscheidung zum Aussortieren ist.

Die Sensoreinheit kann ferner selbst ermitteln, wann das auf dem Fördermittel geförderte und auszusortierende Produkt die Sortiervorrichtung erreichen wird, wenn ihr entsprechende Daten über die Position des Produkts und die Fördergeschwindigkeit übermittelt werden. In einer vereinfachten Ausführungsform erhält die Steuereinheit lediglich ein beispielsweise von einer Lichtschranke ausgegebenes Startsignal, welches unmittelbar zum Absenken der ersten Rolle bzw. des Reibelements führt. Denkbar ist es ferner, die Sortiervorrichtung in Förderrichtung oder quer dazu zu verschieben, um eine besonders günstige Position zum Aussortieren dort eintreffender Produkte auswählen zu können.

Denkbar ist es ferner, eine derartige Verschiebung automatisch vorzunehmen, etwa nach Maßgabe zuvor erfasster Messwerte, welche insbesondere die Position eines auszusortierenden Produktes auf dem Fördermittel betreffen.

Die Absenkbewegung ebenso wie das anschließende Anheben des Reibelements erfolgt idealerweise in sehr kurzer Zeit, bevorzugt binnen weniger als 100ms, höchst bevorzugt in weniger als 10ms. Durch die kurze Absenkzeit (und eine bevorzugt ebenfalls sehr kurze Anhebezeit) kann der Abstand der Produkte auf dem Fördermittel reduziert und somit die Förderrate erhöht werden. Nach jedem Absenken wird das Reibelement bevorzugt wieder angehoben, damit das nachfolgende nächste Produkt entweder ebenfalls aussortiert oder hindurchgelassen werden kann. Die erfindungsgemäße Vorrichtung ist dazu ausgebildet, Produkte mit einer Fördererrate von mehr als 500 Stück pro Minute zu fördern und aus diesem Produktstrom gezielt einzelne Produkte auszusortieren. Vorzugsweise beträgt die Förderrate mehr als 1000 Stück pro Minute. Höchst vorzugsweise ist eine Förderrate von mehr als 2000 Stück pro Minute vorgesehen.

Die erfindungsgemäße Sortiervorrichtung funktioniert dann besonders gut, wenn der Reibungsbeiwert µ_{BP} zwischen der Oberseite des Fördermittels und dem auf dem Fördermittel aufliegenden Material des Produkts kleiner gewählt ist als der entsprechende Reibungsbeiwert µ_{PT} in der Kontaktzone zwischen dem Produkt und dem dort beaufschlagenden Abschnitt des Reibelements. Je größer der Unterschied dieser Beiwerte ist, umso leichter kann das Produkt auf der Oberfläche des Fördermittels entlang gleiten bzw. umso geringer ist der erforderliche Anpressdruck, um eine für das Ausschleusen ausreichende Reibkraft zwischen Reibelement und Produkt zu erzeugen.

Bevorzugt wird die das Reibelement aufnehmende oder bildende Rolle so angetrieben, dass das Reibelement eine Umlaufgeschwindigkeit zwischen 0,1 m/s und 100 m/s, vorzugsweise zwischen 1 m/s und 10 m/s erreicht. Bevorzugt wird das Reibelement mit konstanter Geschwindigkeit und ohne Unterbrechung angetrieben, während einzelne Produkte darunter hindurch gefördert oder mit ihm aussortiert werden. Alternativ kann die Drehzahl jedoch auch in Abhängigkeit anderer Prozessparameter angepasst werden, beispielsweise bei großen Produktionslücken oder bei Start-Stopp-Betrieb. Bei dicht aufeinanderfolgenden und auszusortierenden Produkten entlang des Förderwegs wäre es technisch und energetisch ungünstig oder sogar unmöglich, den Antrieb zwischen zwei Produkten abzuschalten. Ausgeschlossen ist diese Ausführungsform jedoch nicht. Sie kommt insbesondere dann infrage, wenn aus einer Vielzahl von Produkten nur sehr wenige aussortiert werden müssen, so dass das Reibelement nur selten eingesetzt werden muss. Dann kann die zwischenzeitliche Abschaltung des Antriebs zumindest energetisch sinnvoll sein.

Für das zügige Aussortieren ist es hilfreich, wenn die Kontaktzeit, während der das Reibelement das Produkt berührt, möglichst kurz ist und dennoch ausreicht, die erforderliche Reibkraft in das Produkt einzubringen, um es sicher aus dem Förderweg heraus zu bewegen. Vorzugsweise liegt die Kontaktzeit bei weniger als 100ms, besonders bevorzugt bei weniger als 20ms, höchst bevorzugt unter 10ms.

Eine vorteilhafte Ausführungsform der erfindungsgemäßen Sortiervorrichtung sieht vor, dass mehrere gleichartige erste Rollen bzw. von ihnen getragene Reibelemente in Förderrichtung eng beanstandet hintereinander liegen und unabhängig voneinander absenkbar bzw. anhebbar sind. Daraus ergeben sich mehrere Vorteile:
Zum Aussortieren eines Produktes können zwei oder mehr Reibelemente gleichzeitig abgesenkt werden, um gemeinsam zum Beispiel eine stärkere Reibkraft in das Produkt einzuleiten. Das ist dann besonders gut möglich, wenn das Produkt in Förderrichtung breiter ist als ein einzelnes Reibelement und stattdessen beispielsweise von zwei oder mehr Reibelementen gleichzeitig beaufschlagt werden kann.

Zum Aussortieren aufeinanderfolgender Produkte können außerdem unterschiedliche Reibelemente abwechselnd angesteuert werden, um die Förderrate nochmals zu erhöhen. So könnte ein erstes Produkt mit einem ersten Reibelement aussortiert werden. Folgt ein ebenfalls auszusortierendes zweites Produkt unmittelbar danach und liegt dabei bereits im Wirkbereich eines anderen Reibelements, so kann dieses andere Reibelement zum Aussortieren auf das zweite Produkt bereits abgesenkt werden, während das erste Reibelement nach erfolgtem Aussortieren des ersten Produkts wieder angehoben wird. Die einzelnen Ausschleusungen überschneiden sich dann zeitlich, was eine höhere Förderrate ermöglicht.

Bei einer solchen Ausführungsform mit mehreren hintereinander liegenden und separat absenkbaren Reibelementen kann jedes Reibelement in Form eines länglichen Riemens ausgebildet sein, der um eine erste und eine zweite Rolle geführt wird, wie dies vorstehend unter Bezug auf Figur 4 bereits erläutert wurde. Alle ersten oder zweiten Rollen könnten dabei auf einer gemeinsamen, im Wesentlichen ortsfesten und vorzugsweise angetriebenen Achse liegen, während die jeweils anderen Rollen individuell abgesenkbar bzw. anhebbar ausgeführt wären.

Die erfindungsgemäße Vorrichtung sieht vor, dass das Reibelement von oben auf ein darunter befindliches Produkt abgesenkt wird, welches seinerseits auf der Oberfläche des Fördermittels aufliegt. Gleichfalls denkbar wäre es auch, die Beaufschlagung des Produktes mit dem Reibelement seitlich oder auch von unten zu realisieren. In diesem Falle wäre lediglich sicherzustellen, dass eine dem Reibelement gegenüberliegende Anschlagfläche für das Produkt vorgesehen ist, um den nötigen Gegendruck für die Erzeugung der Reibkraft aufbauen zu können. So könnten die Produkte beispielsweise entlang einer solchen vertikalen Anschlagfläche gefördert werden (und dabei auf einem dazu orthogonal verlaufenden Förderband aufliegen), und ein der Anschlagfläche gegenüberliegendes Reibelement erzeugt eine parallel zur Anschlagfläche wirkende Reibkraft, zum Beispiel orthogonal zum Förderband nach oben. Das Produkt würde in diesem Fall nach oben aus dem Produktstrom herausgeworfen werden. Das Reibelement könnte stattdessen auch die Unterseite eines beispielsweise über einen Schlitz geförderten Produktes beaufschlagen, welches auf seiner Oberseite entlang einer eng beabstandeten Anschlagfläche geführt wird, um es bei Beauftragung seitlich aus dem Produktstrom heraus zu bewegen.

Die Erfindung soll nachstehend anhand von Figurenbeispielen näher erläutert werden. Dabei zeigt
- Figur 1: eine schematische Seitenansicht einer Sortiervorrichtung mit Förderband
- Figur 2: eine schematische Teilansicht mit Blick entgegen der Förderrichtung X
- Figur 3: eine schematische Draufsicht mit Blick entgegen Hubrichtung Z, und
- Figur 4: eine schematische Teilansicht einer abgewandelten Ausführungsform, mit Blick entgegen der Förderrichtung X.

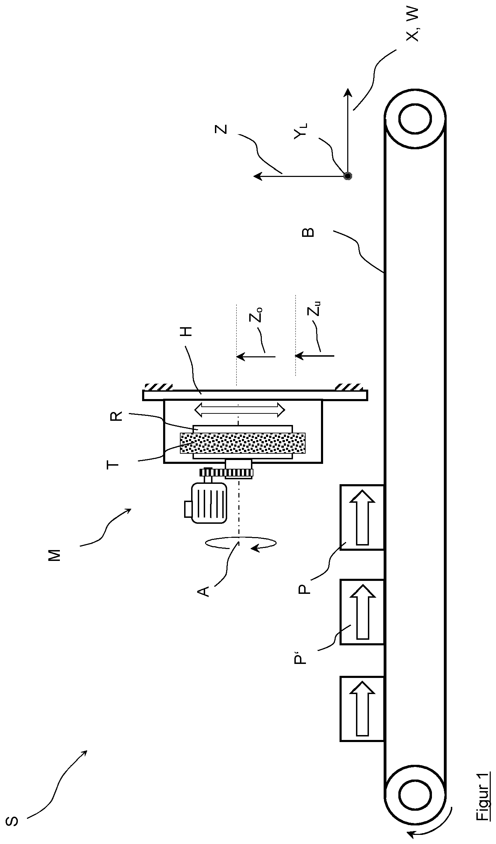

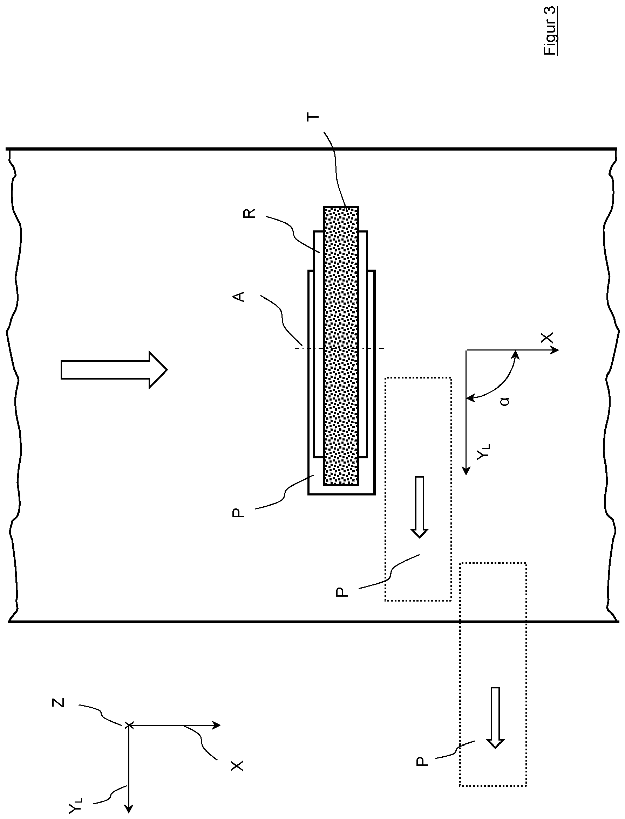

Figur 1 zeigt in vereinfachter Seitenansicht eine erfindungsgemäße Sortiervorrichtung S. Sie umfasst ein um zwei Walzen herumgeführtes Fördermittel in Form eines Förderbands B. Auf dem Förderband B aufliegende einzelne Produkte P, P' werden dabei in einer Förderrichtung X bzw. entlang eines Förderweges W gefördert. Die Produkte P, P' sind in Förderrichtung X gesehen relativ schmal und in einer zur Förderrichtung X orthogonalen Querrichtung Y vergleichsweise lang (siehe hierzu auch die Draufsicht in Figur 3). Beispielsweise kann es sich bei solchen Produkten um verpackte oder unverpackte Schokoriegel oder Müsliriegel handeln.

Oberhalb des Förderbands B ist eine erste Rolle R angeordnet, deren Rollenachse A sich in diesem Ausführungsbeispiel parallel zur Förderrichtung X erstreckt. Ein nicht näher bezeichneter Antrieb, zum Beispiel ein Motor, treibt über einen Zahnriemen die Rolle R zur Rotation an.

Auf ihrem äußeren Umfang ist die erste Rolle R drehfest mit einem Reibelement T versehen, welches in radialer Richtung kompressibel ist und einen hohen Reibbeiwert aufweist. Die erste Rolle R ist über einen nur schematisch dargestellten Hubmechanismus H in einer Hubrichtung Z zwischen einer oberen Endlage Zₒ und einer unteren Endlage Zᵤ bewegbar, wie durch den Doppelpfeil angedeutet ist. Die Hubrichtung Z erstreckt sich orthogonal zur Förderrichtung X und zur Querrichtung Y. Mithilfe des Hubmechanismus H lässt sich die erste Rolle R mit dem umlaufenden Reibelement T in Hubrichtung Z zum Förderband B hin absenken bzw. davon fort anheben. Der Motor zum Antrieb der ersten Rolle kann dabei mit bewegt werden oder auch ortsfest verbleiben, solange der Antrieb der ersten Rolle durchgehend gewährleistet ist.

Figur 2 zeigt die Ausführungsform der Figur 1 in vereinfachter Teilansicht mit Blick entgegen der Förderrichtung X. Die erste Rolle R mit dem darauf angebrachten Reibelement T ist in ihrer oberen Endlage Zₒ dargestellt und zur Rotation in einer ersten Drehrichtung D_{L} angetrieben. Die Vorrichtung ist dazu ausgebildet, die Drehrichtung bei Bedarf auch zu ändern und die erste Rolle R in einer entgegengesetzten zweiten Drehrichtung D_{R} anzutreiben.

Unterhalb der ersten Rolle R ist ein auszusortierendes Produkt P zu sehen, welches in Förderrichtung X gefördert wird und dabei gerade die X-Position unterhalb der ersten Rolle R erreicht hat. Um dieses Produkt P aus dem Produktstrom auszusortieren, wird die erste Rolle R mit ihrem Reibelement T mittels des Hubmechanismus H in Richtung auf die untere Endlage Zᵤ verfahren. Das geschieht bevorzugt sehr schnell, innerhalb weniger Millisekunden. Dabei gelangt das Reibelement T mit der Oberfläche des Produktes P in Kontakt. Aufgrund seiner Elastizität in radialer Richtung kann das Reibelement T um ein bestimmtes Andruck-Maß Δ an das Produkt angedrückt werden, wobei es sich an die Oberfläche des Produktes P anschmiegt und dieses entlang einer Kontaktzone K beaufschlagt. In Abhängigkeit der Elastizität bzw. Kompressibilität des Reibelements T und der Kraft, mit welcher der Hubmechanismus H die erste Rolle R nach unten drückt, wird entlang der Kontaktzone K eine Reibkraft erzeugt, welche orthogonal zur Rollenachse A wirkt und das Produkt P in einer ersten Sortierrichtung Y_{L} (in Figur 2 nach links) aus dem Produktstrom herausschleudert (durch Umkehr der Drehrichtung der ersten Rolle R ergäbe sich die entgegengesetzte Sortierrichtung Y_{R}).

Um das Produkt P in der vorbeschriebenen Weise auszusortieren, muss der zwischen dem Reibelement T und dem Produkt P auftretende Reibbeiwert µ_{PT} größer sein als der zwischen dem Produkt P und der Oberfläche des Fördermittels B auftretende Reibbeiwert µ_{BP}. Je größer diese Differenz ausfällt, umso leichter lässt sich mit der vom Reibelement T erzeugten Reibkraft das Produkt P bewegen und beschleunigen, um aus dem Produktstrom herausgeschleudert zu werden. Die Kontaktzeit zwischen Reibelement und Produkt ist vorzugsweise sehr kurz und liegt im Bereich von Millisekunden. Sobald das Produkt ausreichend stark in Sortierrichtung beschleunigt wurde, um den Produktstrom sicher zu verlassen, kann der Hubmechanismus H die erste Rolle R bereits wieder anheben, um ein nachfolgendes weiteres Produkt P' ebenfalls auszusortieren oder passieren zu lassen.

Figur 3 zeigt in vereinfachter Draufsicht (mit Blick entgegen der Richtung Z), wie ein auszusortierendes Produkt P sich in Sortierrichtung Y_{L} bewegt, während und nachdem es vom Reibelement T der ersten Rolle R beaufschlagt wurde. Zu erkennen ist außerdem, dass die Sortierrichtung Y_{L} mit der Förderrichtung X einen Sortierwinkel α = 90° einschließt. Dieser Winkel lässt sich bei Bedarf ändern, indem die Rollenachse A mit der Förderrichtung X einen Winkel größer Null einschließt, da die am Produkt entstehende Reibkraft orthogonal zur Rollenachse A gerichtet ist.

Figur 4 zeigt eine abgewandelte Ausführungsform der Erfindung in vereinfachter Seitenansicht ähnlich der Figur 2, mit Blick entgegen der Förderrichtung X. Das Reibelement T ist hier in Form eines weichen Riemens bandförmig um die erste Rolle R und eine über ein Gestänge G dazu beabstandete zweite Rolle R' geführt. Während die zweite Rolle R' ortsfest angeordnet ist, kann die erste Rolle R über einen am Gestänge G angreifenden, mit einem pneumatischen Kolben gebildeten Hubmechanismus H auf einem Kreisbahnabschnitt um die Achse der zweiten Rolle R' herum auf und ab bewegt werden. Eine der beiden Rollen R, R' ist dabei über einen nicht näher dargestellten Motor angetrieben, sodass das Reibelement T in der ersten Drehrichtung D_{L} die beiden Rollen umläuft.

Die erste Rolle R ist sowohl in ihrer oberen, hier nicht bezeichneten Endlage, als auch in abgesenkter Position (gestrichelte Darstellung) zu sehen. Durch Betätigung des Hubmechanismus' H gelangt das Reibelement T beim Absenken der ersten Rolle R dabei in bereits bekannter Weise wieder mit dem auszusortierenden Produkt P in Kontakt und beaufschlagt es, gegebenenfalls unter Verformung,entlang einer Kontaktzone K mit der dabei entstehenden Reibkraft zum Aussortieren.

In der Darstellung nach Figur 4 wird das Produkt im Wesentlichen mit dem Abschnitt des Reibelements T am Umfang der ersten Rolle R beaufschlagt, was einem eher punktförmigen Kontakt gleichkommt. Je nach Produkthöhe und Anordnung der Sortiervorrichtung kann aber auch ein tangential an die erste Rolle R anschließender gerader Abschnitt des Reibelements T zur Beaufschlagung des Produkts in der abgesenkten Position verwendet werden. Die Kontaktzone K wird sich dabei vergrößern, was die Erzeugung bzw. Übertragung der Reibkraft erleichtert. Außerdem wird das Produkt P in diesem Fall entlang des geraden Abschnitts und somit eher linienförmig kontaktiert, wobei diese Linie die Sortierrichtung YL präziser definiert und damit die Sortierrichtung des beaufschlagt Produkts genauer vorgeben lässt.

### Bezugszeichen

- A: Achse der Rolle R
- B: Fördermittel
- D_{L}: erste Drehrichtung
- D_{R}: zweite Drehrichtung
- G: Gestänge
- H: Hubmechanismus
- K: Kontaktzone
- P: Produkt
- P': dem Produkt P nachfolgendes Produkt
- R: erste Rolle
- R': zweite Rolle
- S: Sortiervorrichtung
- T: Reibelement
- W: Förderweg
- X: Förderrichtung
- Y: Querrichtung
- Y_{L}: erste Sortierrichtung
- Y_{R}: zweite Sortierrichtung
- Z: Hubrichtung
- Zₒ: obere Endlage
- Zᵤ: untere Endlage
- α: Sortierwinkel
- µ_{BP}: Reibbeiwert zwischen Fördermittel und Produkt
- µ_{PT}: Reibbeiwert zwischen Produkt und Reibelement
- Δ: Andruck-Maß

## Patentansprüche

1. Sortiervorrichtung (S) zur Aussortierung diskreter Produkte (P) aus einem Produktstrom, umfassend
a) ein Fördermittel (B), mit welchem darauf aufliegende diskrete Produkte (P) entlang eines Förderweges (W) in einer Förderrichtung (X) förderbar sind,
b) wenigstens eine in einer ersten Drehrichtung (DL) um eine Achse (A) antreibbare Rolle (Rad, gekrümmte Speichen) (R) und ein von der Rolle gebildetes oder die Rolle (R) wenigstens teilweise umfangsseitig anliegend umlaufendes Reibelement (T),
c) wobei das Reibelement (T) in einer Hubrichtung (Z) zum Fördermittel (B) hin absenkbar bzw. davon weg anhebbar ist, um während der Absenkbewegung gezielt ein entlang des Fördermittels (B) gefördertes Produkt (P) mit einer vorzugsweise vorgebbaren Anpresskraft entlang einer Kontaktzone (K) zu beaufschlagen,
d) wobei das Reibelement (T) dazu ausgebildet ist, auf das von ihm beaufschlagte Produkt (P) eine durch Andruck erzeugte Reibkraft auszuüben, um das Produkt (P) dadurch in eine von der Förderrichtung (X) abweichende erste Sortierrichtung (Y_{L}) zu beschleunigen und durch seitliches Herausbewegen aus dem Produktstrom herauszusortieren.

2. Sortiervorrichtung nach dem vorhergehenden Anspruch, wobei das Reibelement (T) gebildet wird durch
a) einen einstückig mit der Rolle (R) ausgebildeten Reibbelag, oder
b) einen nicht einstückig mit der Rolle ausgebildeten und die Rolle (R) umfangsseitig vollständig umlaufenden Riemen, oder
c) einen um die Rolle (R) und wenigstens eine zweite Rolle (R') geführten Riemen, insbesondere Flach- oder Keilriemen, der dabei in seiner Längsrichtung wenigstens einen geraden Abschnitt aufweist.

3. Sortiervorrichtung nach einem der vorhergehenden Ansprüche, wobei die Rolle (R) und mit ihr das Reibelement (T) wahlweise entgegengesetzt zur ersten Drehrichtung (DL) in die Gegenrichtung (DR) antreibbar ist, um ein auszusortierendes Produkt (P) in eine der ersten Sortierrichtung (YL) entgegengerichtete zweite Sortierrichtung (YR) zu beschleunigen und seitlich aus dem Produktstrom herauszusortieren.

4. Sortiervorrichtung nach einem der vorhergehenden Ansprüche, wobei das Reibelement (T) in Hubrichtung (Z) bewegbar ist, indem die wenigstens eine Rolle (R) zwischen einer oberen Endlage (Zo) und einer unteren Endlage (Zu) mittels eines Hubmechanismus (H) entlang einer geraden oder gekrümmten Bahn auf und ab bewegbar ist und wobei der Hubmechanismus (H) über einen Piezoantrieb und/oder über eine Kurvenscheibe und/oder über einen pneumatischen und/oder elektromechanischen Antrieb antreibbar ist.

5. Sortiervorrichtung nach dem vorhergehenden Anspruch, wobei die beiden Endlagen (Zo, Zu) einen Abstand von weniger als 20mm, vorzugsweise weniger als 10mm haben.

6. Sortiervorrichtung nach einem der vorhergehenden Ansprüche, wobei wenigstens zwei der drei Richtungen Förderrichtung (X), Sortierrichtung (Y_{L}, Y_{R}), Hubrichtung (Z) orthogonal zueinander verlaufen.

7. Verfahren zum Aussortieren diskreter Produkte (P) aus einen Produktstrom mit einer Vorrichtung nach einem der vorhergehenden Vorrichtungsansprüche, umfassend folgende Verfahrensschritte:
a) Absenken des angetriebenen Reibelements (T) auf ein darunter auf dem Fördermittel (B) angeordnetes und vorzugsweise gleichzeitig in Förderrichtung (X) gefördertes, auszusortierendes Produkt (P), so dass das Reibelement (T) die dem Fördermittel (B) abgewandte Oberseite des Produkts (P) entlang einer Kontaktzone (K) des Reibelements (T) mit einer vorzugsweise vorgebbaren Anpresskraft beaufschlagt, um das Produkt (P) durch seitliches Herausbewegen aus dem Produktstrom herauszusortieren,
b) Anheben des Reibelements (T), um ein nachfolgendes Produkt (P') passieren zu lassen oder in Wiederholung von Schritt a) ebenfalls auszusortieren.

8. Verfahren nach dem vorhergehenden Verfahrensanspruch, wobei der Reibungsbeiwert (µBP) zwischen der Oberseite des Fördermittels (B) und dem auf dem Fördermittel (B) aufliegenden Material des Produkts (P) kleiner gewählt ist als der entsprechende Reibbeiwert (µPT) in der Kontaktzone zwischen dem Produkt (P) und dem dort beaufschlagenden Abschnitt des Reibelements (T).

9. Verfahren nach einem der beiden vorhergehenden Verfahrensansprüche,
a) wobei das Reibelement (T) mit einer konstanten Geschwindigkeit zwischen 0,1 m/s und 100 m/s, vorzugsweise zwischen 1 m/s und 10 m/s angetrieben wird, und/oder
b) wobei die Kontaktzeit zwischen Reibelement (T) und auszusortierendem Produkt (P) weniger als 100ms, besonders bevorzugt weniger als 20ms, höchst bevorzugt weniger als 10ms beträgt, und/oder
c) wobei das Reibelement (T) nach erfolgter Kontaktierung mit einem auszusortierenden Produkt (P) wieder angehoben wird, noch während sich ein Abschnitt des in die Sortierrichtung (Y_{L}, YR) beschleunigten Produkts (P) bezogen auf die Hubrichtung (Z) unterhalb des Reibelements (T) befindet, und/oder
d) wobei ein vom Reibelement beaufschlagtes Produkt (P) orthogonal zur Rollenachse (R) aus dem Förderweg (W) herausbewegt wird, und/oder
e) wobei die erste Sortierrichtung (YL) mit der Förderrichtung (X) einen Sortierwinkel (a) einschließt nach der Bedingung (a) = 90° oder (a) < 90° oder Y > 90°, und/oder
f) wobei der Produktstrom mindestens 500 Stück pro Minute, vorzugsweise mehr als 1000 Stück pro Minute, höchst vorzugsweise mehr als 2000 Stück pro Minute fördert, und/oder
g) wobei sich die Kontaktzone (K) in dem Moment, indem das Reibelement (T) das Produkt (P) zu kontaktieren beginnt, erstreckt entlang g₁) einem geraden Abschnitt eines Riemens, oder
g₂) einem geraden und einem um die erste Rolle geführten, kreisbogenförmigen Abschnitt eines Riemens, oder
g₃) einem kreisbogenförmigen Abschnitt eines vollumfänglich um die erste Rolle (R) geführten Riemens oder Reibbelags.
